# EUROPEAN PATENT APPLICATION

(11) **EP 4 793 021 A1**
(43) Date of publication of application: **19.08.2026**
(21) Application number: 25773048.1
(22) Date of filing: 18.03.2025
(51) Int. Cl.: B29C 49/42

(54) **PREFORM INSERTING DEVICE AND HEATING MACHINE**

(30) Priority: 19.03.2024 CN 202410315075
(71) Applicant: Guangzhou Tech-Long Packaging Machinery Co., Ltd, Guangzhou, Guangdong 510530 (CN)
(72) Inventor: ZOU, Daqun, Guangzhou, Guangdong 510530 (CN); HE, Wenming, Guangzhou, Guangdong 510530 (CN); SONG, Kuiwei, Guangzhou, Guangdong 510530 (CN)
(74) Representative: HGF
(86) International application number: PCT/CN2025/083064
(87) International publication number: WO 2025/195349

(57) **Abstract**

Provided are a preform inserting device and a heating machine. The heating machine includes a preform inserting device (100) and a frame (200). The preform inserting device (100) includes a rotating mechanism (10) and multiple bottom-supporting mechanisms (20). The rotating mechanism (10) is rotatable around an axis in a vertical direction relative to the frame (200), and multiple first fitting portions (121) are arranged along the circumference of the rotating mechanism (10). A first fitting portion (121) is configured to limit an upper end of a bottle preform. The multiple bottom-supporting mechanisms (20) are connected to the rotating mechanism (10) and are arranged below the multiple first fitting portions (121) in one-to-one correspondence. A bottom-supporting mechanism (20) is movable upward along the vertical direction at a preset timing to support and align a lower end of the bottle preform located at the first fitting portion (121).

## Description

This application claims priority to Chinese Patent Application No. 202410315075.2 filed with the China National Intellectual Property Administration (CNIPA) on Mar. 19, 2024, the disclosure of which is incorporated herein by reference in its entirety.

### TECHNICAL FIELD

The present application relates to the technical field of heating machines, for example, a preform inserting device and a heating machine.

### BACKGROUND

A blown-bottle production line is configured to heat bottle preforms and blow-mold the bottle preforms into formed blown bottles. The bottle preforms are heated by a heating machine. In the related art, the heating machine includes a heating furnace, a conveying chain, bottle-preform clamping mechanisms, and a preform inserting device. The bottle-preform clamping mechanisms are arranged on the conveying chain, and the preform inserting device is arranged outside the heating furnace. The preform inserting device can receive bottle preforms from an upstream process. The bottle-preform clamping mechanisms can move from top to bottom, so as to be inserted into openings of upper ends of the bottle preforms and grip the bottle preforms (this process is hereinafter referred to as "preform insertion"). The conveying chain can drive the bottle-preform clamping mechanisms and the bottle preforms into the heating furnace. After the bottle preforms are heated, the conveying chain can drive the bottle-preform clamping mechanisms and the bottle preforms out of the heating furnace.

However, when the preceding heating machine is used for preform insertion of bottle preforms with relatively large height dimensions, misalignment or incomplete insertion is prone to occur, thereby adversely affecting the clamping stability of the bottle preforms and the uniformity of subsequent heating of the bottle preforms.

### SUMMARY

The present application provides a preform inserting device that can ensure that bottle-preform clamping mechanisms are accurately inserted into and grip bottle preforms.

The present application provides a heating machine. By providing the preceding preform inserting device, the heating machine can ensure that the bottle-preform clamping mechanisms are accurately inserted into and grip the bottle preforms, thereby improving the yield rate of bottle preform processing.

An embodiment of the present application provides a preform inserting device. The preform inserting device is mounted onto a frame and includes a rotating mechanism and multiple bottom-supporting mechanisms.

The rotating mechanism is rotatable around an axis in a vertical direction relative to the frame, multiple first fitting portions are arranged along a circumference of the rotating mechanism, and a first fitting portion of the multiple first fitting portions is configured to limit an upper end of a bottle preform.

The multiple bottom-supporting mechanisms are connected to the rotating mechanism and are arranged below the multiple first fitting portions in one-to-one correspondence, and a bottom-supporting mechanism of the multiple bottom-supporting mechanisms is movable upward along the vertical direction at a preset timing to support and align a lower end of the bottle preform located at the first fitting portion.

In an embodiment, the rotating mechanism includes a third turntable and multiple first guide posts arranged along a circumference of the third turntable, each of the multiple first guide posts is movable up and down along the vertical direction relative to the third turntable, each bottom-supporting mechanism of the multiple bottom-supporting mechanisms is connected to at least one first guide post of the multiple first guide posts, and the preform inserting device further includes a first cam guide rail.

The first cam guide rail is connected to the frame, the bottom-supporting mechanism is configured to abut against the first cam guide rail during movement with the rotating mechanism, the first cam guide rail includes a first cam portion, and the first cam portion is configured to lift the bottom-supporting mechanism upward to enable the bottom-supporting mechanism to support the lower end of the bottle preform.

In an embodiment, the preform inserting device further includes an elastic restoring member, where one end of the elastic restoring member is connected to the rotating mechanism, the other end of the elastic restoring member is connected to the bottom-supporting mechanism, and the elastic restoring member has a tendency to drive the bottom-supporting mechanism to move downward to be separated from the lower end of the bottle preform.

In an embodiment, the bottom-supporting mechanism includes a connecting assembly, a supporting member, and an elastic buffering member.

The connecting assembly is connected to the at least one first guide post and is configured to abut against the first cam guide rail.

The supporting member is movable along the vertical direction relative to the connecting assembly, the supporting member is formed with a supporting groove, and the shape of the supporting groove matches the shape of the bottom of the bottle preform.

The elastic buffering member is arranged between the connecting assembly and the supporting member along the vertical direction.

In an embodiment, the connecting assembly includes at least two guide columns arranged along the vertical direction, the supporting member is slidably engaged with the at least two guide columns, and one elastic buffering member is sleeved onto each guide column of the at least two guide columns.

In an embodiment, the connecting assembly includes a connecting plate and a first bearing.

The connecting plate is connected to the at least one first guide post.

The first bearing is connected to the connecting plate, and during rotation of the rotating mechanism, the first bearing is configured to abut against and be rollingly engaged with the first cam guide rail.

An embodiment of the present application provides a heating machine. The heating machine includes a heating furnace, a conveying chain, multiple bottle-preform clamping mechanisms connected to the conveying chain, and the preform inserting device, where the conveying chain is configured to drive a bottle-preform clamping mechanism of the multiple bottle-preform clamping mechanisms to move above the first fitting portion holding the bottle preform, at least part of the bottle-preform clamping mechanism is movable downward to grip the bottle preform, and the conveying chain is further configured to drive the bottle-preform clamping mechanisms into the heating furnace.

In an embodiment, the heating machine further includes a feeding conveying mechanism, and the feeding conveying mechanism includes a guiding body and a rotation conveying member.

The guiding body is connected to the frame and is formed with a feeding chute and a guiding wall.

The rotation conveying member is connected to the frame and is arranged on one side of the guiding wall, multiple second fitting portions are arranged along a circumference of the rotation conveying member, a second fitting portion of the multiple the second fitting portions is configured to cooperate with the guiding wall to clamp the upper end of the bottle preform, the rotation conveying member is rotatable relative to the frame to convey the bottle preform from the feeding chute to the first fitting portion, and the first fitting portion and the second fitting portion are configured to jointly clamp the upper end of the bottle preform.

In an embodiment, the preform inserting device further includes a second cam guide rail and multiple lifting drive mechanisms.

The second cam guide rail is connected to the frame, and the second cam guide rail includes a second guide rail body arranged around the rotating mechanism, a second cam portion, and a third cam portion, where the second cam portion and the third cam portion protrude from an upper surface of the second guide rail body.

The multiple lifting drive mechanisms are arranged along the circumference of the rotating mechanism, are arranged above the multiple first fitting portions in one-to-one correspondence, and are configured to rotate with the rotating mechanism while simultaneously sliding along the second cam guide rail.

In a case where a lifting drive mechanism of the multiple lifting drive mechanisms moves from the second cam portion to the second guide rail body, the lifting drive mechanism moves downward relative to the rotating mechanism and is docked with the bottle-preform clamping mechanism at a corresponding position, and the lifting drive mechanism is configured to drive the at least part of the bottle-preform clamping mechanism to move downward to grip the bottle preform.

In a case where the lifting drive mechanism moves from the second guide rail body to the third cam portion, the lifting drive mechanism moves upward relative to the rotating mechanism and is separated from the bottle-preform clamping mechanism.

In an embodiment, the bottle-preform clamping mechanism includes a base and a clamping assembly.

The base is connected to the conveying chain, the clamping assembly is movable up and down relative to the base, an upper end of the clamping assembly is configured to be docked with the lifting drive mechanism, and a lower end of the clamping assembly is configured to clamp the upper end of the bottle preform.

### BRIEF DESCRIPTION OF DRAWINGS

FIG. 1 is a structural view taken at a viewing angle to illustrate a heating machine according to an embodiment of the present application.
FIG. 2 is an enlarged view of part A in FIG. 1.
FIG. 3 is a partial structural view taken at another viewing angle to illustrate a heating machine according to an embodiment of the present application.
FIG. 4 is a partial structural view of a preform inserting device according to an embodiment of the present application.
FIG. 5 is a structural view taken at another viewing angle to illustrate the structure shown in FIG. 4.
FIG. 6 is a structural view taken at a viewing angle to illustrate a bottom-supporting mechanism according to an embodiment of the present application.
FIG. 7 is a structural view taken at another viewing angle to illustrate a bottom-supporting mechanism according to an embodiment of the present application.
FIG. 8 is a top view of a bottom-supporting mechanism according to an embodiment of the present application.
FIG. 9 is a sectional view taken along B-B in FIG. 8.

### Reference list

- 100: preform inserting device
- 200: frame
- 300: heating furnace
- 400: bottle-preform clamping mechanism
- 410: base
- 420: clamping assembly
- 500: feeding conveying mechanism
- 510: guiding body
- 511: feeding chute
- 512: guiding wall
- 520: rotation conveying member
- 521: second fitting portion
- 600: conveying chain
- 700: bottle preform
- 10: rotating mechanism
- 11: rotating shaft
- 12: first turntable
- 121: first fitting portion
- 13: second turntable
- 141: first guide post
- 15: third turntable
- 16: second guide post
- 17: second guide sleeve
- 20: bottom-supporting mechanism
- 21: connecting assembly
- 211: guide column
- 2111: stop portion
- 212: connecting plate
- 213: first bearing
- 22: supporting member
- 221: supporting groove
- 222: guiding inclined surface
- 223: mounting hole
- 224: recessed groove
- 23: elastic buffering member
- 24: third guide sleeve
- 30: first cam guide rail
- 31: first cam portion
- 32: first guide rail body
- 41: elastic restoring member
- 42: elastic member
- 50: second cam guide rail
- 51: second guide rail body
- 52: second cam portion
- 60: lifting drive mechanism
- 61: lifting drive source
- 62: docking assembly

### DETAILED DESCRIPTION

The present application is described below in conjunction with the drawings and embodiments. It is to be understood that the embodiments set forth below are intended to illustrate but not to limit the present application. For ease of description, only part, not all, of structures related to the present application are illustrated in the drawings.

In the description of the present application, the terms "joined", "connected", and "fixed" are to be understood in a broad sense unless otherwise expressly specified and limited. For example, the term "connected" may refer to "fixedly connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, meanings of the preceding terms in the present application may be understood according to situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "upper", "lower", and "right" are based on the drawings. These orientations or position relations are intended only to facilitate description and simplify operation and not to indicate or imply that a device or element referred to must have such particular orientations or must be configured or operated in such particular orientations. Thus, these orientations or position relations are not to be construed as limiting the present application. Additionally, the terms "first" and "second" are only used for distinguishing between descriptions and have no special meanings.

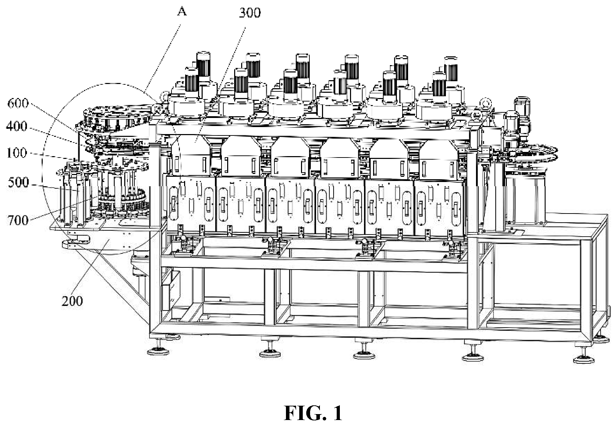

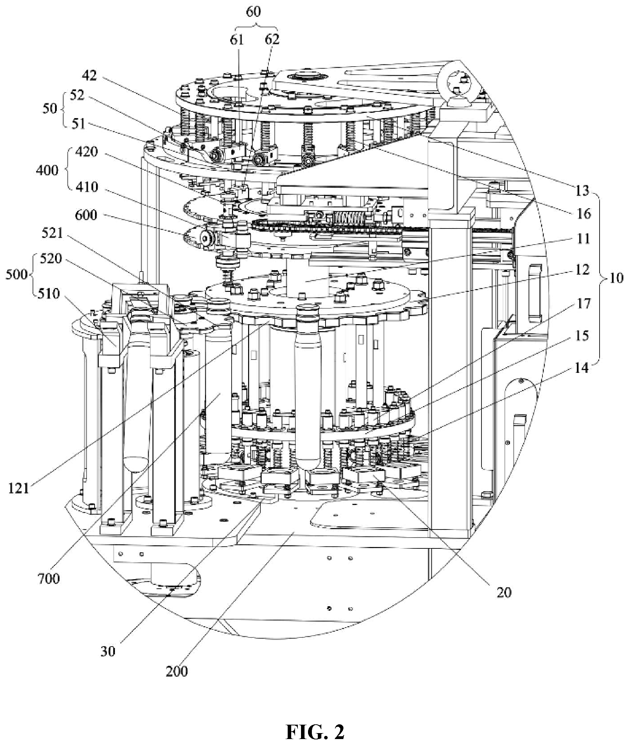

As shown in FIG. 1, this embodiment provides a preform inserting device 100 and a heating machine. The heating machine includes the preform inserting device 100 and is configured to heat bottle preforms 700. In this embodiment, as shown in FIGS. 1 and 2, a bottle preform 700 is substantially cylindrical, and an opening is provided at an upper end of the bottle preform 700. The bottle preform 700 is conveyed and heated in the heating machine in a vertical orientation.

As shown in FIGS. 1 and 2, the heating machine includes a frame 200, a feeding conveying mechanism 500, the preform inserting device 100, a conveying chain 600 (only part of which is schematically shown), multiple bottle-preform clamping mechanisms 400 (only one of which is schematically shown), and a heating furnace 300. The feeding conveying mechanism 500, the preform inserting device 100, the conveying chain 600, and the heating furnace 300 are all supported on the frame 200. The feeding conveying mechanism 500 and the preform inserting device 100 are located outside the heating furnace 300. The feeding conveying mechanism 500 is able to receive a to-be-heated bottle preform 700 and convey the bottle preform 700 to a position at which the bottle preform 700 is docked with the preform inserting device 100. The preform inserting device 100 is configured to cooperate with a bottle-preform clamping mechanism 400 so that the bottle-preform clamping mechanism 400 can perform preform insertion (that is, a process in which the bottle-preform clamping mechanism 400 is inserted into an opening at an upper end of the bottle preform 700 and grips the bottle preform 700) and preform withdrawal (that is, a process in which the bottle-preform clamping mechanism 400 is withdrawn from the bottle preform 700 and is separated from the bottle preform 700). The multiple bottle-preform clamping mechanisms 400 are mounted onto the conveying chain 600, and the conveying chain 600 is able to drive the bottle-preform clamping mechanisms 400 to move along a preset trajectory. The preset trajectory includes moving to the preform inserting device 100 for preform insertion, moving into the heating furnace 300 for heating, and returning to the preform inserting device 100 for preform withdrawal.

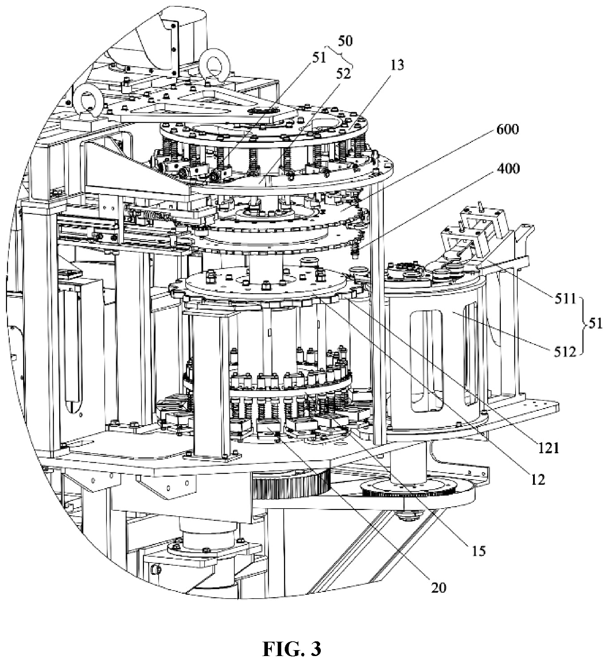

As shown in FIGS. 2 and 3, the feeding conveying mechanism 500 includes a guiding body 510, a rotation conveying member 520, and a first driving member (not shown). The guiding body 510 is connected to the frame 200 and is formed with a feeding chute 511 and a guiding wall 512. An inlet end of the feeding chute 511 is at a higher horizontal position than an outlet end of the feeding chute 511. After an external manipulator places the bottle preform 700 at the inlet end of the feeding chute 511, the bottle preform 700 is able to automatically slide to the outlet end of the feeding chute 511. The guiding wall 512 is arranged at the outlet end of the feeding chute 511. The rotation conveying member 520 is connected to the frame 200 and is arranged on one side of the guiding wall 512. The first driving member is able to drive the rotation conveying member 520 to rotate around an axis in the vertical direction. Multiple second fitting portions 521 are arranged along the circumference of the rotation conveying member 520. Each second fitting portion 521 is able to cooperate with the guiding wall 512 to clamp the upper end of the bottle preform 700. The rotation conveying member 520 is able to receive the bottle preform 700 from the outlet end of the feeding chute 511. During the rotation of the rotation conveying member 520, the bottle preform 700 is conveyed from the outlet end of the feeding chute 511 to the preform inserting device 100. In this case, the rotation conveying member 520 and the preform inserting device 100 jointly clamp the upper end of the bottle preform, and the position where the rotation conveying member 520 and the preform inserting device 100 jointly clamp the upper end of the bottle preform is hereinafter referred to as a preform inserting station. In this embodiment, the rotation conveying member 520 includes a disc member, and the second fitting portions 521 are grooves formed on the circumference of the disc member. Optionally, the first driving member may be a motor.

As shown in FIG. 2, the preform inserting device 100 includes a rotating mechanism 10 arranged on one side of the rotation conveying member 520. The rotating mechanism 10 is rotatable around the axis in the vertical direction relative to the frame 200. Multiple first fitting portions 121 are arranged along the circumference of the rotating mechanism 10. A first fitting portion 121 is able to cooperate with the second fitting portion 521 on the rotation conveying member 520 to jointly clamp the upper end of the bottle preform 700. As shown in FIG. 2, the rotating mechanism 10 includes a rotating shaft 11 and a first turntable 12. The rotating shaft 11 is rotatably supported on the frame 200. The first turntable 12 is coaxially arranged with and connected to the rotating shaft 11. The first fitting portions 121 are grooves formed on the circumference of the first turntable 12. At the preform inserting station, the first fitting portion 121 and the second fitting portion 521 jointly clamp the upper end of the bottle preform 700. In this embodiment, the preform inserting device 100 further includes a second driving member (not shown), which is configured to drive the rotating mechanism 10 to rotate around the axis in the vertical direction. Optionally, the second driving member includes a motor that is connected to the rotating shaft 11 through a transmission structure. In some embodiments, the first driving member and the second driving member are the same driving member that drives the rotating mechanism 10 and the rotation conveying member 520 to rotate through transmission structures, respectively.

As shown in FIGS. 2 and 3, the conveying chain 600 includes at least two sprockets and a chain (not shown) drivingly engaged with the at least two sprockets. The bottle-preform clamping mechanisms 400 are connected to the chain, and the chain drives the bottle-preform clamping mechanisms 400 to move along the preset trajectory during transmission. In this embodiment, one of the at least two sprockets is coaxially arranged with the rotating mechanism 10. When the chain drives the bottle-preform clamping mechanisms 400 to move to the rotating mechanism 10, preform insertion and preform withdrawal may be performed.

As shown in FIG. 2, the bottle-preform clamping mechanism 400 includes a base 410 and a clamping assembly 420. The base 410 is connected to the chain of the conveying chain 600. The clamping assembly 420 is connected to the base 410 and is able to move up and down relative to the base 410. The clamping assembly 420 extends through the base 410 in the up-down direction. When the bottle-preform clamping mechanism 400 is moved to a position above the bottle preform 700 located at the preform inserting station, the clamping assembly 420 is driven to move downward relative to the base 410 by a driving component, so that a lower end of the clamping assembly 420 is inserted into the opening at the upper end of the bottle preform 700, thereby gripping the bottle preform 700. It is to be understood that the bottle-preform clamping mechanism 400 may adopt any existing structure capable of gripping and releasing the bottle preform 700 only through the lifting movement of the clamping assembly 420, which is not limited herein.

Optionally, as shown in FIGS. 2 and 3, the preform inserting device 100 further includes a second cam guide rail 50 and multiple lifting drive mechanisms 60. The multiple lifting drive mechanisms 60 are arranged along the circumference of the rotating mechanism 10 and are arranged above the multiple first fitting portions 121 in one-to-one correspondence. The multiple lifting drive mechanisms 60 are rotatable with the rotating mechanism 10 and are each movable up and down relative to the rotating mechanism 10. The second cam guide rail 50 is connected to the frame 200 and includes a second guide rail body 51 and a second cam portion 52. The second guide rail body 51 is arranged around the rotating mechanism 10, and the second cam portion 52 protrudes from an upper surface of the second guide rail body 51. The lifting drive mechanisms 60 slide along the second cam guide rail 50 simultaneously while rotating with the rotating mechanism 10. When moving from the second cam portion 52 to the second guide rail body 51, a lifting drive mechanism 60 moves downward relative to the rotating mechanism 10, thereby being docked with the bottle-preform clamping mechanism 400 at a corresponding position. After docking is completed, the lifting drive mechanism 60 is able to drive the clamping assembly 420 of the bottle-preform clamping mechanism 400 to move downward to grip the bottle preform 700.

Before the bottle-preform clamping mechanism 400 and the bottle preform 700 clamped by the bottle-preform clamping mechanism 400 are conveyed into the heating furnace by the conveying chain 600, the lifting drive mechanism 60 is required to be separated from the bottle-preform clamping mechanism 400. Accordingly, the second cam guide rail 50 further includes a third cam portion that also protrudes from the upper surface of the second guide rail body 51 and is spaced apart from the second cam portion 52. When the lifting drive mechanism 60 rotates with the rotating mechanism 10 and moves from the second guide rail body 51 onto the third cam portion, the third cam portion pushes the lifting drive mechanism 60 to move upward relative to the rotating mechanism 10, thereby separating the lifting drive mechanism 60 from the bottle-preform clamping mechanism 400. After the conveying chain 600 drives the bottle-preform clamping mechanism 400 and the heated bottle preform 700 out of the heating furnace and back to the preform inserting device 100, the bottle-preform clamping mechanism 400 needs to be withdrawn from the bottle preform 700. In this case, the lifting drive mechanism 60 rotates with the rotating mechanism 10 and moves from the third cam portion to the second guide rail body 51 so that the lifting drive mechanism 60 moves downward relative to the rotating mechanism 10, thereby being docked with the clamping assembly 420 of the bottle-preform clamping mechanism 400 (in this case, the bottle-preform clamping mechanism 400 clamps the heated bottle preform 700). Afterwards, the lifting drive mechanism 60 drives the clamping assembly 420 to move upward relative to the base 410, so as to separate the clamping assembly 420 from the bottle preform 700. Subsequently, the lifting drive mechanism 60 continues rotating with the rotating mechanism 10, and when the lifting drive mechanism 60 moves from the second guide rail body 51 to the second cam portion 52, the lifting drive mechanism 60 moves upward relative to the rotating mechanism 10, thereby being separated from the clamping assembly 420 of the bottle-preform clamping mechanism 400.

In this embodiment, as shown in FIGS. 2 and 3, the rotating mechanism 10 includes a second turntable 13 that is arranged above the first turntable 12 and is connected to the rotating shaft 11. The multiple lifting drive mechanisms 60 are connected to the second turntable 13. The rotating mechanism 10 further includes multiple first guide sleeves and multiple second guide posts 16 extending along the vertical direction. The multiple first guide sleeves are uniformly distributed along the circumference of the second turntable 13. Each second guide post 16 is slidably engaged with a respective second guide sleeve 17. Each lifting drive mechanism 60 is connected to at least one second guide post 16. When the second guide post 16 slides up and down relative to the second guide sleeve 17, the corresponding lifting drive mechanism 60 is driven to move up and down. When the lifting drive mechanism 60 moves from the second cam portion 52 or the third cam portion onto the second guide rail body 51, the lifting drive mechanism 60 moves downward relative to the rotating mechanism 10 together with the corresponding second guide post 16, thereby being docked with the bottle-preform clamping mechanism 400. When the lifting drive mechanism 60 moves from the second guide rail body 51 to the second cam portion 52 or the third cam portion, the lifting drive mechanism 60 moves upward relative to the rotating mechanism 10 together with the corresponding second guide post 16, thereby being separated from the bottle-preform clamping mechanism 400.

Optionally, the preform inserting device 100 further includes multiple elastic members 42. Each elastic member 42 is sleeved onto a respective second guide post 16, with one end connected to the second turntable 13 and the other end connected to the lifting drive mechanism 60. The provision of the elastic members 42 enables smoother lifting movement of the lifting drive mechanisms 60. Optionally, the elastic members 42 may be springs.

As shown in FIG. 2, the lifting drive mechanism 60 includes a lifting drive source 61 and a docking assembly 62. The docking assembly 62 is connected to a lower end of the lifting drive source 61. When the entire lifting drive mechanism 60 moves downward relative to the rotating mechanism 10, the docking assembly 62 is docked with an upper end of the clamping assembly 420. In this case, the lifting drive source 61 is able to drive the docking assembly 62 and the clamping assembly 420 to move upward or downward synchronously, so as to perform preform insertion and preform withdrawal. Optionally, the lifting drive source 61 may be a cylinder, and the structure of the docking assembly 62 and the structure of the upper end of the clamping assembly 420 may each adopt any existing structure, as long as connection or separation can be achieved only through a relative lifting movement.

For a bottle preform 700 with a relatively large height dimension, during the downward movement of the clamping assembly 420 of the bottle-preform clamping mechanism 400 for preform insertion, misalignment or incomplete insertion is prone to occur, thereby adversely affecting the clamping stability of the bottle preform 700 and the uniformity of subsequent heating of the bottle preform 700.

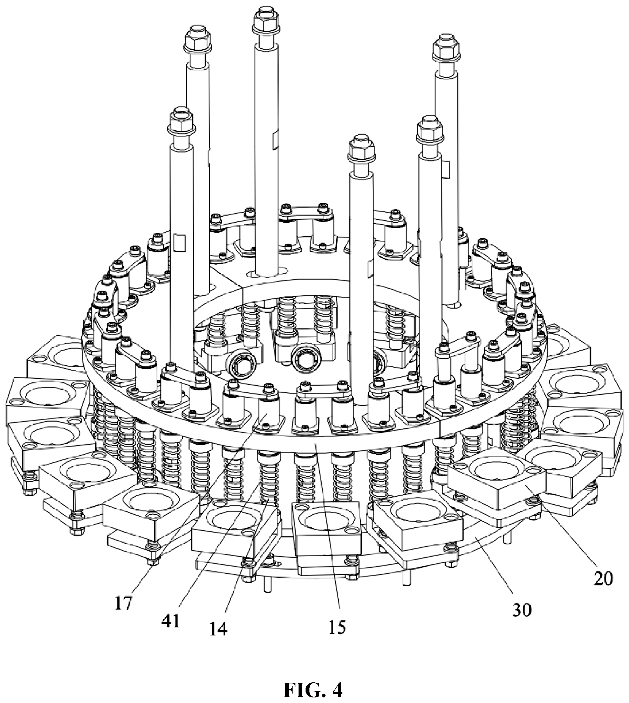

Accordingly, as shown in FIGS. 2 and 4, the preform inserting device 100 in this embodiment further includes multiple bottom-supporting mechanisms 20. The multiple bottom-supporting mechanisms 20 are connected to the rotating mechanism 10 and are arranged below the multiple first fitting portions 121 in one-to-one correspondence. A bottom-supporting mechanism 20 is movable upward along the vertical direction at a preset timing to support and align a lower end of the bottle preform 700 located at the corresponding first fitting portion 121. The preset timing refers to a process in which the clamping assembly 420 of the bottle-preform clamping mechanism 400 starts to move downward to be inserted into the bottle preform 700 or is being inserted into the bottle preform 700. In the preform inserting device 100 in this embodiment, during preform insertion, the first fitting portion 121 and the second fitting portion 521 cooperate to limit the upper end of the bottle preform 700, while the bottom-supporting mechanism 20 moves upward to support the lower end of the bottle preform 700. Accordingly, the posture of the bottle preform 700 during preform insertion is aligned, thereby ensuring that the bottle-preform clamping mechanism 400 can be accurately inserted into and grip the bottle preform 700 and further ensuring stable clamping of the bottle preform 700 and the uniformity of subsequent heating of the bottle preform 700.

In this embodiment, as shown in FIGS. 2 and 4, the rotating mechanism 10 further includes a third turntable 15, multiple second guide sleeves 17, and multiple first guide posts 14. The third turntable 15 is arranged below the first turntable 12 and is coaxially arranged with the first turntable 12. The third turntable 15 is connected to the first turntable 12 through multiple connecting columns. The multiple second guide sleeves 17 are connected to the third turntable 15 and are uniformly distributed along the circumference of the third turntable 15. Each first guide post 14 is slidably engaged with a respective second guide sleeve 17, and each bottom-supporting mechanism 20 is connected to at least one first guide post 14. Therefore, driven by a driving component, the bottom-supporting mechanism 20 and the at least one first guide post 14 synchronously move up and down relative to the third turntable 15. In this embodiment, every two first guide posts 14 form a group, and each bottom-supporting mechanism 20 is connected to two first guide posts 14 in the same group, thereby ensuring the accuracy of the lifting movement of the bottom-supporting mechanism 20.

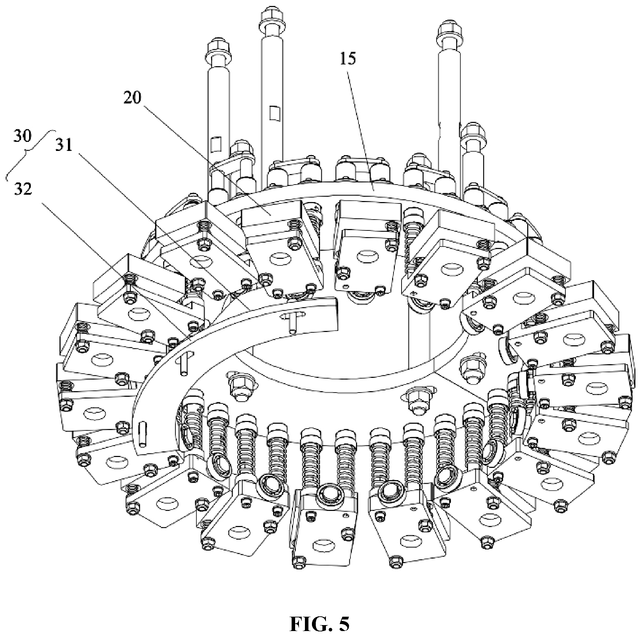

Optionally, as shown in FIGS. 4 and 5, the preform inserting device 100 further includes a first cam guide rail 30. The first cam guide rail 30 includes a first guide rail body 32 and a first cam portion 31. The first guide rail body 32 is arranged in a neighboring region below the preform inserting station, and the first cam portion 31 protrudes from the first guide rail body 32. The bottom-supporting mechanism 20 is able to abut against the first cam guide rail 30 during movement with the rotating mechanism 10. When the bottom-supporting mechanism 20 moves from the first guide rail body 32 to the first cam portion 31, the first cam portion 31 lifts the bottom-supporting mechanism 20 upward to enable the bottom-supporting mechanism 20 to support the lower end of the bottle preform 700. When the bottom-supporting mechanism 20 rotates with the rotating mechanism 10 to leave the first cam portion 31, the bottom-supporting mechanism 20 moves downward to be separated from the bottle preform 700. In this embodiment, by appropriately arranging the position of the first cam portion 31, the bottom-supporting mechanism 20 can be lifted at the preset timing, thereby ensuring the accuracy of preform insertion. In addition, the lifting movement of the bottom-supporting mechanism 20 does not require to be driven by a driving source, resulting in a simple structure, low cost, and low energy consumption.

Optionally, as shown in FIG. 4, the preform inserting device 100 further includes elastic restoring members 41. The elastic restoring members 41 are sleeved onto the first guide posts 14, respectively. One end of an elastic restoring member 41 is connected to the rotating mechanism 10, and the other end of the elastic restoring member 41 is connected to the bottom-supporting mechanism 20. The elastic restoring member 41 has a tendency to drive the bottom-supporting mechanism 20 to move downward to be separated from the lower end of the bottle preform 700. Therefore, when the bottom-supporting mechanism 20 rotates to leave the first cam portion 31, the elastic restoring member 41 can buffer the downward movement of the bottom-supporting mechanism 20, thereby ensuring that the bottom-supporting mechanism 20 slowly resets, preventing excessive collision between the at least one first guide post 14 and the third turntable 15, further prolonging the service life of the heating machine, and reducing the operating noise of the heating machine. Optionally, the elastic restoring members 41 may be springs.

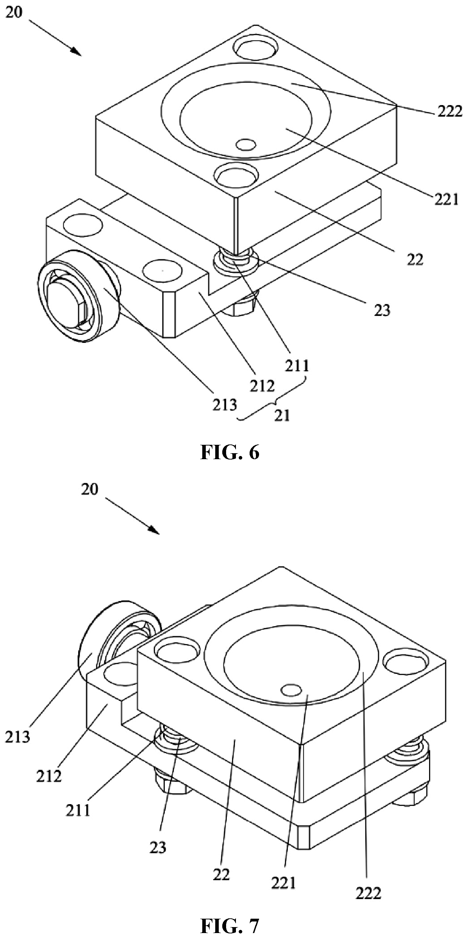

Optionally, as shown in FIGS. 6 to 8, the bottom-supporting mechanism 20 includes a connecting assembly 21, a supporting member 22, and an elastic buffering member 23. The connecting assembly 21 is connected to the at least one first guide post 14 and is able to abut against the first cam guide rail 30 during the rotation with the rotating mechanism 10. The supporting member 22 is movable along the vertical direction relative to the connecting assembly 21 and is formed with a supporting groove 221. The shape of the supporting groove 221 matches the shape of the bottom of the bottle preform 700. The elastic buffering member 23 is arranged between the connecting assembly 21 and the supporting member 22 along the vertical direction. During the upward movement of the bottom-supporting mechanism 20 to support the bottom of the bottle preform 700, the provision of the elastic buffering member 23 can prevent rigid collision between the supporting member 22 and the bottle preform 700, thereby reducing the risk of damage to the bottle preform 700 while ensuring reliable alignment of the bottle preform 700. Optionally, the elastic buffering member 23 may be a spring. In this embodiment, each connecting assembly 21 is connected to two first guide posts 14. Optionally, a guiding inclined surface 222 is provided at the edge of the supporting groove 221. The guiding inclined surface 222 can guide the lower end of the bottle preform 700 to be smoothly engaged with the supporting groove 221, thereby further preventing the rigid collision between the supporting member 22 and the bottle preform 700.

Optionally, as shown in FIGS. 6 to 8, the connecting assembly 21 includes at least two guide columns 211 arranged along the vertical direction. The supporting member 22 is slidably engaged with the at least two guide columns 211, and one elastic buffering member 23 is sleeved onto each guide column 211. On one hand, the provision of at least two elastic buffering members 23 enables the supporting member 22 to bear force uniformly and allows a certain degree of inclination of the supporting member 22 during the alignment process of the bottle preform 700, thereby further preventing rigid collision between the supporting member 22 and the bottle preform 700; on the other hand, the at least two guide columns 211 can limit the movement of the supporting member 22 to ensure accurate final positioning of the supporting member 22, thereby ensuring the reliable alignment of the bottle preform 700.

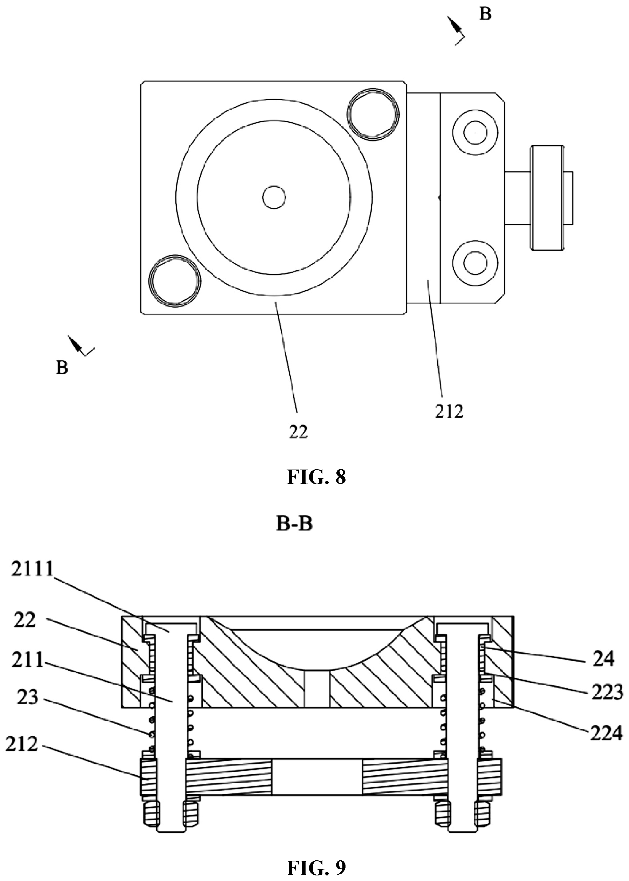

In this embodiment, as shown in FIG. 9, the supporting member 22 is provided with two mounting holes 223, and one third guide sleeve 24 is mounted within each mounting hole 223. Each guide column 211 is slidably engaged with a respective third guide sleeve 24. Optionally, a stop portion 2111 is provided at an upper end of the guide column 211. The stop portion 2111 abuts against an upper end surface of the third guide sleeve 24. The stop portion 2111 cooperates with the elastic buffering member 23 to jointly limit the lifting height of the supporting member 22 relative to the connecting assembly 21. Optionally, a recessed groove 224 is provided at a lower end of the mounting hole 223, and part of the elastic buffering member 23 is accommodated within the recessed groove 224. The recessed groove 224 can limit the deformation of the elastic buffering member 23.

In this embodiment, as shown in FIGS. 6 to 8, the connecting assembly 21 includes a connecting plate 212 and a first bearing 213. The connecting plate 212 is connected to the two first guide posts 14 in the same group, and the at least two guide columns 211 are connected to the connecting plate 212. The first bearing 213 is connected to the connecting plate 212, and during the rotation of the rotating mechanism 10, the first bearing 213 is able to abut against and be rollingly engaged with the first cam guide rail 30. By providing contact and relative movement between the first bearing 213 and the first cam guide rail 30, wear between the connecting assembly 21 and the first cam guide rail 30 can be significantly reduced, thereby prolonging the service life of the preform inserting device 100. A connecting shaft is fixed to a side of the connecting plate 212 and is connected to the first bearing 213.

In the present application, by providing the preceding preform inserting device, the heating machine can ensure that the bottle-preform clamping mechanisms are accurately inserted into and grip the bottle preforms, thereby improving the yield rate during the subsequent heating of the bottle preforms.

## Claims

1. A preform inserting device, mounted onto a frame (200) and comprising:
a rotating mechanism (10), wherein the rotating mechanism (10) is rotatable around an axis in a vertical direction relative to the frame (200), a plurality of first fitting portions (121) are arranged along a circumference of the rotating mechanism (10), and a first fitting portion (121) of the plurality of first fitting portions (121) is configured to limit an upper end of a bottle preform; and
a plurality of bottom-supporting mechanisms (20), wherein the plurality of bottom-supporting mechanisms (20) are connected to the rotating mechanism (10) and are arranged below the plurality of first fitting portions (121) in one-to-one correspondence, and a bottom-supporting mechanism (20) of the plurality of bottom-supporting mechanisms (20) is movable upward along the vertical direction at a preset timing to support and align a lower end of the bottle preform located at the first fitting portion (121).

2. The preform inserting device according to claim 1, wherein the rotating mechanism (10) comprises a third turntable (15) and a plurality of first guide posts (14) arranged along a circumference of the third turntable (15), each of the plurality of first guide posts (14) is movable up and down along the vertical direction relative to the third turntable (15), each bottom-supporting mechanism (20) of the plurality of bottom-supporting mechanisms (20) is connected to at least one first guide post (14) of the plurality of first guide posts (14), and the preform inserting device further comprises:
a first cam guide rail (30), wherein the first cam guide rail (30) is connected to the frame (200), the bottom-supporting mechanism (20) is configured to abut against the first cam guide rail (30) during movement with the rotating mechanism (10), the first cam guide rail (30) comprises a first cam portion (31), and the first cam portion (31) is configured to lift the bottom-supporting mechanism (20) upward to enable the bottom-supporting mechanism (20) to support the lower end of the bottle preform.

3. The preform inserting device according to claim 2, further comprising an elastic restoring member (41), wherein one end of the elastic restoring member (41) is connected to the rotating mechanism (10), another end of the elastic restoring member (41) is connected to the bottom-supporting mechanism (20), and the elastic restoring member (41) has a tendency to drive the bottom-supporting mechanism (20) to move downward to be separated from the lower end of the bottle preform.

4. The preform inserting device according to claim 2, wherein the bottom-supporting mechanism (20) comprises:
a connecting assembly (21), wherein the connecting assembly (21) is connected to the at least one first guide post (14) and is configured to abut against the first cam guide rail (30);
a supporting member (22), wherein the supporting member (22) is movable along the vertical direction relative to the connecting assembly (21), the supporting member (22) is formed with a supporting groove (221), and a shape of the supporting groove (221) matches a shape of a bottom of the bottle preform; and
an elastic buffering member (23), wherein the elastic buffering member (23) is arranged between the connecting assembly (21) and the supporting member (22) along the vertical direction.

5. The preform inserting device according to claim 4, wherein the connecting assembly (21) comprises at least two guide columns (211) arranged along the vertical direction, the supporting member (22) is slidably engaged with the at least two guide columns (211), and one elastic buffering member (23) is sleeved onto each guide column (211) of the at least two guide columns (211).

6. The preform inserting device according to claim 4, wherein the connecting assembly (21) comprises:
a connecting plate (212), wherein the connecting plate (212) is connected to the at least one first guide post (14); and
a first bearing (213), wherein the first bearing (213) is connected to the connecting plate (212), and during rotation of the rotating mechanism (10), the first bearing (213) is configured to abut against and be rollingly engaged with the first cam guide rail (30).

7. A heating machine, comprising a heating furnace (300), a conveying chain (600), a plurality of bottle-preform clamping mechanisms (400) connected to the conveying chain (600), and the preform inserting device according to any one of claims 1 to 6, wherein the conveying chain (600) is configured to drive a bottle-preform clamping mechanism (400) of the plurality of bottle-preform clamping mechanisms (400) to move above the first fitting portion (121) holding the bottle preform, at least part of the bottle-preform clamping mechanism (400) is movable downward to grip the bottle preform, and the conveying chain (600) is further configured to drive the bottle-preform clamping mechanisms (400) into the heating furnace (300).

8. The heating machine according to claim 7, further comprising a feeding conveying mechanism (500), wherein the feeding conveying mechanism (500) comprises:
a guiding body (510), wherein the guiding body (510) is connected to the frame (200) and is formed with a feeding chute (511) and a guiding wall (512); and
a rotation conveying member (520), wherein the rotation conveying member (520) is connected to the frame (200) and is arranged on one side of the guiding wall (512), a plurality of second fitting portions (521) are arranged along a circumference of the rotation conveying member (520), a second fitting portion (521) of the plurality of the second fitting portions (521) is configured to cooperate with the guiding wall (512) to clamp the upper end of the bottle preform, the rotation conveying member (520) is rotatable relative to the frame (200) to convey the bottle preform from the feeding chute (511) to the first fitting portion (121), and the first fitting portion (121) and the second fitting portion (521) are configured to jointly clamp the upper end of the bottle preform.

9. The heating machine according to claim 7, wherein the preform inserting device further comprises:
a second cam guide rail (50), wherein the second cam guide rail (50) is connected to the frame (200), and the second cam guide rail (50) comprises a second guide rail body (51) arranged around the rotating mechanism (10), a second cam portion (52), and a third cam portion, wherein the second cam portion (52) and the third cam portion protrude from an upper surface of the second guide rail body (51); and
a plurality of lifting drive mechanisms (60), wherein the plurality of lifting drive mechanisms (60) are arranged along the circumference of the rotating mechanism (10), are arranged above the plurality of first fitting portions (121) in one-to-one correspondence, and are configured to rotate with the rotating mechanism (10) while simultaneously sliding along the second cam guide rail (50);
wherein in a case where a lifting drive mechanism (60) of the plurality of lifting drive mechanisms (60) moves from the second cam portion (52) to the second guide rail body (51), the lifting drive mechanism (60) moves downward relative to the rotating mechanism (10) and is docked with the bottle-preform clamping mechanism (400) at a corresponding position, and the lifting drive mechanism (60) is configured to drive the at least part of the bottle-preform clamping mechanism (400) to move downward to grip the bottle preform; and
wherein in a case where the lifting drive mechanism (60) moves from the second guide rail body (51) to the third cam portion, the lifting drive mechanism (60) moves upward relative to the rotating mechanism (10) and is separated from the bottle-preform clamping mechanism (400).

10. The heating machine according to claim 9, wherein the bottle-preform clamping mechanism (400) further comprises:
a base (410) and a clamping assembly (420), wherein the base (410) is connected to the conveying chain (600), the clamping assembly (420) is movable up and down relative to the base (410), an upper end of the clamping assembly (420) is configured to be docked with the lifting drive mechanism (60), and a lower end of the clamping assembly (420) is configured to clamp the upper end of the bottle preform.
